# EUROPÄISCHE PATENTSCHRIFT

(11) **EP 3 162 018 B1**
(45) Veröffentlichungstag und Bekanntmachung des Hinweises auf die Patenterteilung: **13.02.2019**
(21) Anmeldenummer: 15728408.4
(22) Anmeldetag: 02.06.2015
(51) Int. Cl.: H04L 29/08, H04L 29/06

(54) **VERFAHREN ZUM AUFBAU EINER FÜR DIE ÜBERMITTLUNG VON MEDIENSTRÖMEN GEEIGNETEN KOMMUNIKATIONSVERBINDUNG VON EINEM ERSTEN RTC-CLIENT ZU EINEM ZWEITEN RTC-CLIENT**
METHOD FOR ESTABLISHING A COMMUNICATION CONNECTION WHICH IS SUITABLE FOR TRANSMITTING MEDIA STREAMS BETWEEN A FIRST RTC CLIENT AND A SECOND RTC CLIENT
PROCÉDÉ POUR ÉTABLIR UNE CONNEXION DE COMMUNICATION, APPROPRIÉE À LA TRANSMISSION DE FLUX DE MÉDIAS, D'UN PREMIER CLIENT RTC À UN SECOND CLIENT RTC

(30) Priorität: 26.06.2014 DE 102014009495
(43) Veröffentlichungstag der Anmeldung: 03.05.2017
(73) Patentinhaber: Unify GmbH & Co. KG, 80807 München (DE)
(72) Erfinder: STACH, Thomas, 1130 Wien (AT); HORVATH, Ernst, 1060 Wien (AT); WINTER, Johannes, 2352 Gumpoldskirchen (AT)
(74) Vertreter: Fritzsche, Thomas
(86) Internationale Anmeldenummer: PCT/EP2015/001116
(87) Internationale Veröffentlichungsnummer: WO 2016/008558

(56) Entgegenhaltungen:
- WO-A1-2014/019497
- US-A1- 2014 126 715

## Beschreibung

Die vorliegende Erfindung betrifft ein Verfahren zum Aufbau einer für die Übermittlung von Medienströmen geeigneten Kommunikationsverbindung von einem ersten Realtime Communication Client (RTC-Client) zu einem zweiten RTC-Client gemäß dem Oberbegriff des Anspruchs 1. Die vorliegende Erfindung betrifft außerdem ein das Verfahren implementierendes Computerprogramm bzw. Computerprogrammprodukt, einen entsprechenden maschinenlesbaren Datenträger mit darauf gespeichertem Computerprogramm sowie eine Telekommunikationsanordnung gemäß dem Oberbegriff des Anspruchs 10 zur Ausführung des Verfahrens.

Hierzu offenbart die US 2014/126715 A1 ein System und ein Verfahren, die eine Echtzeitkommunikation zwischen einem Webbrowser und einer Kontaktstellenressource ermöglichen, wobei sich die von beiden Seiten unterstützten Mediencodecs unterscheiden können. Ein Prozessor ist dazu eingerichtet zwischen dem Browser und der Kontaktstellenressource ausgetauschte Medien zu übermitteln. Dabei transcodiert der Prozessor die Medien basierend auf einem dem Webbrowser entsprechenden ersten Mediencodec sowie basierend auf einem der Kontaktstellenressource entsprechenden zweiten Mediencodec.

Die WO 2014/019497 A1 beschreibt ein Echtzeitkommunikationsverfahren (RTC-Verfahren), ein Endgerät, einen RTC-Server und ein RTC-System. Hierbei weist das Verfahren die Schritte auf: Empfangen von Anrufanfrageinformationen durch ein erstes Endgerät, die von einem anderen Endgerät über einen RTC-Server zum ersten Endgerät übertragen wurden und die einen eindeutigen Identifikator einer WebRTC-Anwendung des übertragenden Endgeräts tragen; Bestimmen durch das erste Endgerät, ob die Anrufanfrage aufgrund des eindeutigen Identifikators angenommen werden soll; falls ja, Übertragen von WebRTC-Anwendungsaktivierungsanfrageinformationen zum RTC-Server und nach Empfang der WebRTC-Anwendungsaktivierungsanfrageinformationen vom RTC-Server, Kommunizieren mit dem die Anrufanfrageinformation übertragenden Endgerät mittels der WebRTC-Anwendung.

Das JSEP (JavaScript Session Establishment Protocol) wird, unter anderem aufgrund einer WebRTC-Initiative (Realtime Communication über das Worldwide Web) des IETF (Internet Engineering Task Force) und W3C (World Wide Web Consortium), häufig für den Austausch von Medien-spezifischen Daten und Parametern zwischen einem Webbrowser und einer im Browser laufenden, auf JavaScript basierenden, Applikation verwendet, um eine IP-basierte Kommunikationsverbindung zu einem anderen Browser, einem IPbasierten Telefon oder einem Gateway in einem Telefonnetz aufzubauen. Das JSEP befindet sich gerade in einer Spezifizierung durch die IETF, wobei der aktuelle Stand der Arbeiten dokumentiert ist in http://tools.ietf.org/html/draft-ietf-rtcweb-jsep-02. Das JSEP basiert auf dem Austausch von SDP-basierten Medienbeschreibungen (SDP = Session Description Protocol, RFC (Request for Comments) 4566) und beruht auf einem zweistufigen Signalisierungsmodell. In der ersten Stufe werden die Fähigkeiten (auch Capabilities genannt) des Browsers in Form eines SDP-Datensatzes abgerufen (beispielsweise mittels eines Befehls CreateOffer). In einer zweiten Stufe wird der Browser mit den gewünschten Medienparametern durch Übergabe eines - möglicherweise modifizierten - SDP-Datensatzes konfiguriert, was beispielsweise mittels des Befehls SetLocalDescription erfolgen kann.

Die Medienparameter werden anschließend mit Hilfe eines Webservers an den Kommunikationspartner gesendet. Nach Erhalt der Antwort mit den Medienparametern des Kommunikationspartners werden die Medienparameter vom Webserver an den JavaScript-Code im Browser übergeben, der dann mit den Medienparametern des Partners konfiguriert wird (beispielsweise mittels des Befehls SetRemoteDescription), um die Kommunikation zu ermöglichen.

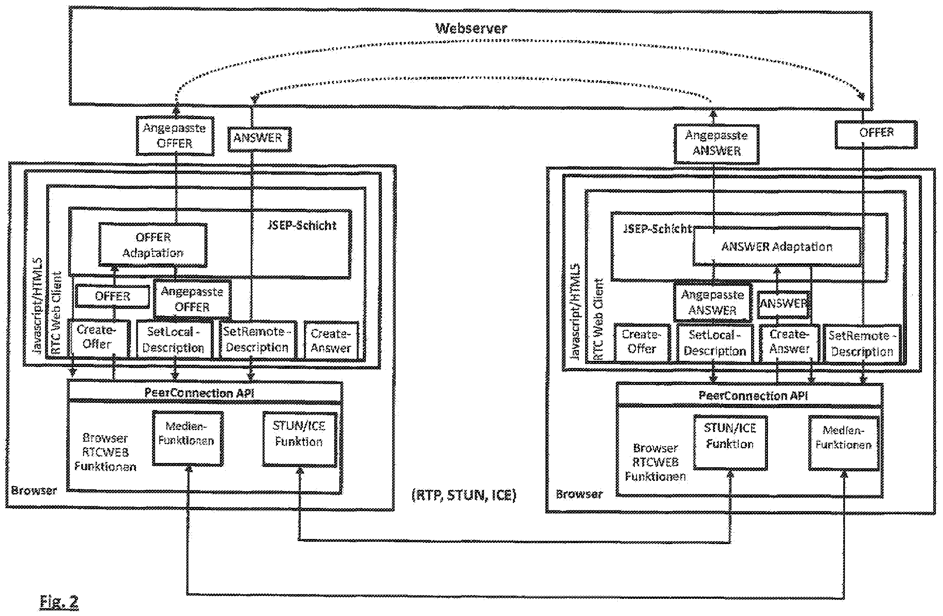

Die aktuelle JSEP-Spezifikation http://tools.ietf.org/html/draft-ietf-rtcweb-jsep-02#section-1 beschreibt, dass die vorstehend beschriebene Modifikation der SDP-Datensätze in der JavaScript-Applikation durchgeführt wird. Eine derartige Vorgehensweise ist als Anschauungsbeispiel in Fig. 2 dargestellt, bei dem JSEP mit JavaScript-basierter SDP-Modifikation eingesetzt wird.

Die vorstehend beschriebene Vorgehensweise wird bisweilen als nicht flexibel genug angesehen.

Der vorliegenden Erfindung liegt die Aufgabe zugrunde, das vorstehend genannte Verfahren so weiterzuentwickeln, dass es flexibler wird und vielseitiger eingesetzt werden kann.

Gelöst wird diese Aufgabe mit einem computerimplementierten Verfahren gemäß Anspruch 1, einem zur Durchführung dieses Verfahrens gestalteten Computerprogrammprodukt gemäß Anspruch 8, einen das Computerprogrammprodukt speichernden maschinenlesbaren Datenträger gemäß Anspruch 9 sowie einer Telekommunikationsanordnung gemäß Anspruch 10. Vorteilhafte Weiterbildungen der Erfindung sind Gegenstand der abhängigen Ansprüche.

Erfindungsgemäß ist vorgesehen, dass ein erster RTC-Client eine Anforderung zum Aufbau einer Kommunikationsverbindung erstellt. Die Anforderung enthält dabei Medien-spezifische Daten und/oder Parameter des ersten RTC-Clients sowie vorzugsweise der Kommunikationsverbindung. Dann wird die vom ersten RTC-Client erstellte Anforderung an die Medien-spezifischen Daten und/oder Parameter eines zweiten RTC-Clients - mit dem eine Kommunikationsverbindung aufgebaut werden soll - angepasst. Diese angepasste Anforderung wird dann an den zweiten RTC-Client übertragen, und dieser erstellt wiederum eine Antwort auf die angepasste Anforderung. Der zweite RTC-Client wird dann unter Verwendung der angepassten Anforderung und der Antwort konfiguriert. Außerdem wird die Antwort zusätzlich an den ersten RTC-Client übertragen, der wiederum unter Verwendung der angepassten Anforderung und der Antwort konfiguriert wird. Das erfindungsgemäße Verfahren zeichnet sich dadurch aus, dass der erste RTC-Client die Anforderung an einen Webserver - und gerade nicht "über den Webserver" an den Kommunikationspartner - übermittelt und in analoger Weise der zweite RTC-Client die Antwortebenfalls an den Webserver übermittelt. Ferner nimmt erfindungsgemäß der Webserver - und nicht der Browser des Kommunikationspartners - die Anforderung vor und übermittelt einerseits die angepasste Anforderung sowohl an den zweiten RTC-Client als auch zurück an den ersten RTC-Client sowie andererseits die Antwort sowohl an den ersten RTC-Client als auch zurück an den zweiten RTC-Client.

Erfindungsgemäß können selbstverständlich auch mehrere erste RTC-Clients und/oder mehrere zweite RTC-Clients vorhanden sein, die beispielsweise unterschiedliche Medien (Audio/Video) senden bzw. erhalten.

Der vorliegenden Erfindung liegt somit der Gedanke zugrunde, die Änderung der Anforderung (in einem Beispiel die SDP-Modifikation) nicht durch den JavaScript-Code in einem Browser ausführen zu lassen, sondern innerhalb des Webservers. Daher müssen die entsprechenden Daten an den entsprechenden Webserver adressiert werden, der somit nicht lediglich als Durchgangsstation für die Daten bzw. Parameter, Anforderungen und Antworten dient.

Hierbei ist festzuhalten, dass die Protokolle zwischen einem Browser und einem Webserver nicht notwendigerweise definiert sein müssen. Die Daten sowie die Codecs etc. müssen jedoch definiert sein, wobei nicht mal das SDP verwendet werden muss. Es ist jedoch in der Regel so, dass ein Browser ein SDP an einen WebRTC-Client schickt, beispielsweise über einen CREATE-Befehl. Zum besseren Verständnis der vorliegenden Erfindung sind nachstehend einige Abkürzungen und Erläuterungen kurz zusammengefasst:
- (S)RTP = (Secure) Real-Time Transport Protocol, vgl. RFC 3550, RFC 3711,
- STUN = Session Traversal Utilities for NAT (Network Address Translation), vgl. RFC 5389,
- ICE = Interactive Connectivity Establishment, vgl. RFC 5245,
- REST = Representational State Transfer,
- SIP = Session Initiation Protocol
- ein WebRTC-Client ist typischerweise ein Webbrowser,
- eine Anforderung erfolgt beispielsweise über ein SDP-OFFER,
- eine Antwort erfolgt beispielsweise über ein SDP-ANSWER,

Gemäß einer vorteilhaften Weiterbildung des erfindungsgemäßen Verfahrens passt der Webserver die Antwort an die Medien-spezifischen Daten und/oder Parameter des ersten RTC-Clients - sowie gegebenenfalls der Kommunikationsverbindung - an, bevor der Webserver die (angepasste) Antwort an den ersten RTC-Client und an den zweiten RTC-Client übermittelt. Dies ist insbesondere dann von Vorteil, wenn sich die Situation zwischen dem Senden und dem Antworten geändert hat, was beispielsweise bei einer veränderten Bandbreite wegen einer zusätzlichen Videoverbindung auftreten kann.

Das erfindungsgemäße Verfahren bietet besondere Vorteile, wenn einem Benutzer mehrere Kommunikationsgeräte zugeordnet sind, die jeweils einen ersten RTC-Client und/oder einen zweiten RTC-Client aufweisen und wenn unterschiedliche Medientypen zu verschiedenen Kommunikationsgeräten übermittelt werden. So können beispielsweise Audiodaten an ein Smartphone mit Freisprecheinrichtung übermittelt werden, Videodaten jedoch an ein Tablet oder ein Notebook zur Wiedergabe gesendet werden, um deren größeren Bildschirm zu nutzen. In solchen Fällen kann der Webserver die Medienparameter - basierend auf dem Wissen um die verschiedenen Geräte und die Präferenzen der Benutzer - entsprechend modifizieren. Insofern ist also die vorliegende Erfindung von besonderem Vorteil, wenn die Medienströme verschiedenartige Medien umfassen.

Es kann vorteilhaft sein, wenn als Verbindung zwischen dem ersten RTC-Client, dem zweiten RTC-Client und dem Webserver eine sogenannte Web-Socket-Verbindung oder ein HTTP-PUT-Request eingesetzt wird.

Ferner kann es Vorteile bringen, wenn für die Kommunikation zwischen dem ersten RTC-Client, dem zweiten RTC-Client und dem Webserver sogenannte RESTful-Prozeduren (also REST-artige Prozeduren) in Kombination mit einem asynchronen Event Reporting verwendet werden. Hierzu wird beispielsweise ein Ruf mit mehreren Teilnehmern als ein Satz von jeweils den beteiligten Nutzern zugeordneten, zentral am Webserver verwalteten Ressourcen modelliert, wobei der Webserver dann auch die Koordination dieser Ressourcen zu einem einheitlichen Gesamtbild des Rufes übernimmt.

Gemäß einer Ausführungsform der Erfindung kann das Session Description Protocol (SDP) zur Erstellung und Übermittlung der Anforderung, der angepassten Anforderung, der Antwort und gegebenenfalls der angepassten Antwort verwendet werden.

Ein Computerprogrammprodukt, das geeignet zur Durchführung des vorstehend genannten Verfahrens ausgestaltet ist, sowie ein maschinenlesbarer Datenträger mit darauf gespeichertem Computerprogrammprodukt sind ebenfalls als zur vorliegenden Erfindung gehörig anzusehen.

Die der Erfindung zugrundeliegende Aufgabe wird außerdem gelöst mit einer Telekommunikationsanordnung, die einen Webserver, einen mit dem Webserver entweder verbindbaren oder bereits verbundenen ersten RTC-Client sowie einen mit dem Webserver verbindbaren oder bereits verbundenen zweiten RTC-Client aufweist. Die erfindungsgemäße Telekommunikationsanordnung ist dabei so ausgestaltet, dass der Webserver, der erste RTC-Client und der zweite RTC-Client Einrichtungen aufweisen, die zum Ausführen des vorstehend beschriebenen Verfahrens ausgebildet sind. Derartige Einrichtungen können beispielsweise Software-Komponenten, zur Ausführung dieser Software-Komponenten geeignete Prozessoren bzw. Hardware-Komponenten oder dergleichen sein.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen schematisch:
- Fig. 1: eine Darstellung einer Ausführungsform einer erfindungsgemäßen Telekommunikationsanordnung, woraus auch die einzelnen ablaufenden Schritte ersichtlich sind,
- Fig. 2: eine Darstellung einer Telekommunikationsanordnung gemäß dem Stand der Technik und einer Übersichtsdarstellung der darauf ablaufenden Schritte,
- Fig. 3: eine Prinzipdarstellung einer Konstellation, bei der Audio- und Videodaten von einem Teilnehmer zu einem anderen Teilnehmer übermittelt werden,
- Fig. 4: eine Darstellung eines Modells einer Sitzungsressource, und
- Fig. 5 und 6: zwei Beispiele eines erfindungsgemäßen Rufaufbaus.

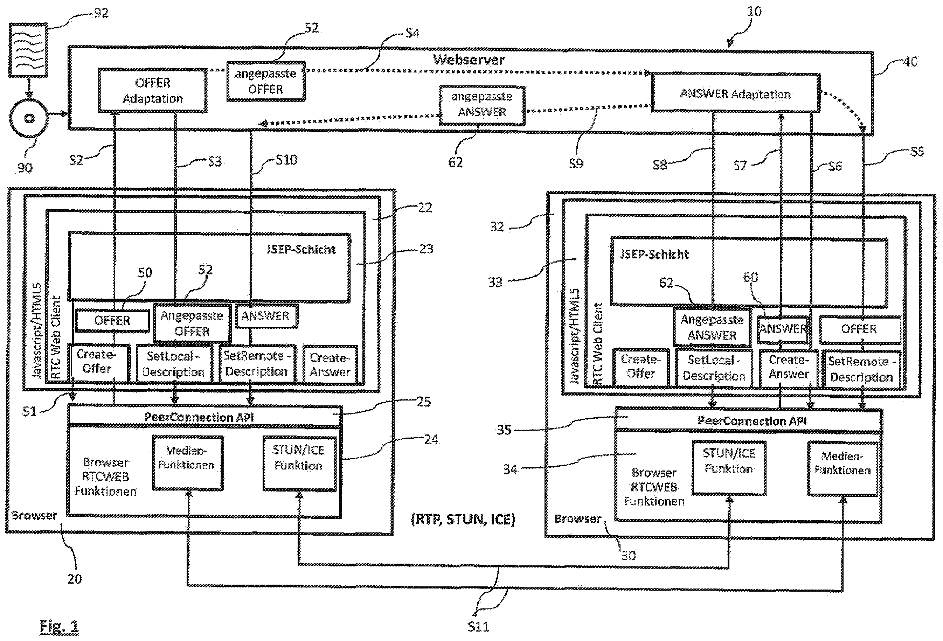

Gemäß Fig. 1 umfasst die erfindungsgemäße Telekommunikationsanordnung 10 einen Webserver 40, einen ersten RTC-Client 20 und einen zweiten RTC-Client 30, die jeweils mit dem Webserver 40 verbunden sind oder zumindest verbunden werden können. Beide RTC-Clients sind oder beinhalten vorzugsweise Browser bzw. WebRTC-Browser. Die RTC-Clients 20, 30 sind jeweils mit einem ersten Funktionsblock 22 bzw. 32 und einem zweiten Funktionsblock 24 bzw. 34 versehen. Der erste Funktionsblock 22, 32 betrifft JavaScript/HTML5, eine JSEP-Schicht sowie einen RTCWeb-Client 23 bzw. 33, und der zweite Funktionsblock 24 bzw. 34 betrifft Funktionen eines WebRTC-Browsers (die in Fig. 1 gewählte Bezeichnung RTCWeb ist der Bezeichnung WebRTC äquivalent) und enthält ein PeerConnection-API 25 bzw. 35.

Des Weiteren zeigt Fig. 1 einen schematisch in Form einer CD dargestellten Datenträger 90, auf dem ein Computerprogrammprodukt 92 gespeichert ist und der beispielsweise vom Webserver 40 gelesen werden kann.

Nachfolgend soll anhand von Fig. 1 eine Ausführungsform des erfindungsgemäßen Verfahrens zum Aufbau einer für die Übermittlung von Medienströmen geeigneten Kommunikationsverbindung von einem ersten Browser bzw. RTC-Client 20 zu einem zweiten Browser bzw. RTC-Client 30 beschrieben werden. Fig. 1 betrifft in anderen Worten ein erfindungsgemäßes Verfahren, bei dem JSEP mit Webserver-basierter SDP-Modifikation eingesetzt wird.

In einem Schritt S1 ruft der WebRTC-Client 23 im Browser 20 eine PeerConnection-API (API = Application Programming Interface) 25 des zweiten Funktionsblocks 24 mit der Methode CreateOffer auf.

In einem Schritt S2 wird als Ergebnis vom Browser 20 ein SDP-Datensatz generiert, als Anforderung 50 in Form einer SDP-OFFER markiert und dem WebRTC-Client 23 zur Verfügung gestellt. Diese Anforderung 50 enthält Medien-spezifische Daten und Parameter des ersten Browsers 20 und der Kommunikationsverbindung. Der WebRTC-Client 23 leitet diese Anforderung 50 an den Webserver 40 weiter, beispielsweise über eine schon bestehende Web-Socket-Verbindung, einen HTTP-PUT-Request oder andere Methoden.

Der Webserver 40 kann nun in einem Schritt S3 eine Anpassung oder Manipulation der SDP-OFFER 50 in einer speziellen "OFFER-Adaptation"-Funktion in beliebiger Art vornehmen. Als Beispiel hierfür genannt sei die Reduzierung der Anzahl angebotener Codecs oder die Entfernung von Videoströmen, falls beispielsweise nicht genügend Bandbreite zur Verfügung steht. Diese angepasste Antwort bzw. SDP-OFFER 52 wird nun an den WebRTC-Client 23 im Browser 20 zurückgeschickt und über eine SetLocalDescription-Methode der PeerConnection-API 25 an den ersten Browser 20 weitergegeben und konfiguriert diesen damit.

In einem Schritt S4, der gleichzeitig mit Schritt S3 erfolgen kann, wird die angepasste Anforderung 52 in Form einer angepassten SDP-OFFER zum zweiten Browser 30 weitergeleitet und zur späteren Erstellung einer angepassten Antwort 62 in Form einer modifizierten SDP-ANSWER durch den zweiten Browser 30 einer sogenannten "ANSWER-Adaptation"-Funktion zur Kenntnis gebracht.

In einem Schritt S5 wird die angepasste Anforderung 52 dann an den zweiten Browser 30 weitergeleitet, z. B. über eine schon bestehende Web-Socket-Verbindung.

In einem Schritt S6 wird die angepasste Anforderung 52 im zweiten Browser 30 über die SetRemoteDescription-Methode der PeerConnection-API 35 an den Browser 30 weitergegeben. Um eine Antwort 60 in Form einer SDP-ANSWER zu generieren, ruft der WebRTC-Client 33 die Create-Answer-Methode der PeerConnection-API 35 auf und erhält einen als SDP-ANSWER markierten SDP-Datensatz.

In einem Schritt S7 leitet der WebRTC-Client 33 wiederum die Antwort 60 an den Webserver 40 weiter, z. B. über eine schon bestehende Web-Socket-Verbindung, einen HTTP-PUT-Request oder andere Methoden.

In einem Schritt S8 kann nun in einer "ANSWER-Adaptation"-Funktion nochmals eine Manipulation oder Anpassung der SDP-ANSWER 60 unter Berücksichtigung der korrespondierenden angepassten SDP-OFFER 52 vorgenommen und eine angepasste Antwort 62 in Form einer angepassten SDP-ANSWER erstellt werden. Diese angepasste SDP-ANSWER 62 wird dann an den WebRTC-Client 33 im zweiten Browser 30 zurückgeschickt und über die SetLocalDescription-Methode der PeerConneciton-API 35 an den Browser 30 weitergegeben und dieser damit konfiguriert. Der beschriebene Schritt S8 ist insofern optional, als eine Anpassung der Antwort 60 bzw. SDP-ANSWER nur dann vorgenommen zu werden braucht, wenn sie erforderlich ist. Der Schritt S8 als solcher ist aber nötig, um die SetLocalDescription-Methode aufrufen zu können.

In einem Schritt S9, der gleichzeitig zum Schritt S8 vorgenommen werden kann, wird die angepasste SDP-ANSWER 62 an den WebRTC-Client 23 im ersten Browser 20 zurückgeschickt.

In einem Schritt S10 wird über die SetRemoteDescription-Methode der PeerConnection-API 25 die angepasste SDP-ANSWER 62 an den Browser 20 weitergegeben und dieser damit konfiguriert.

Nun kennen beide Browser 20, 30 die Medien-Parameter ihres jeweiligen Gegenübers und können Medienströme austauschen, was in einem Schritt S11 angedeutet ist. Die hierbei angegebenen Abkürzungen RTP, STUN, ICE stehen für die für den Austausch gegebenenfalls verwendeten Protokolle.

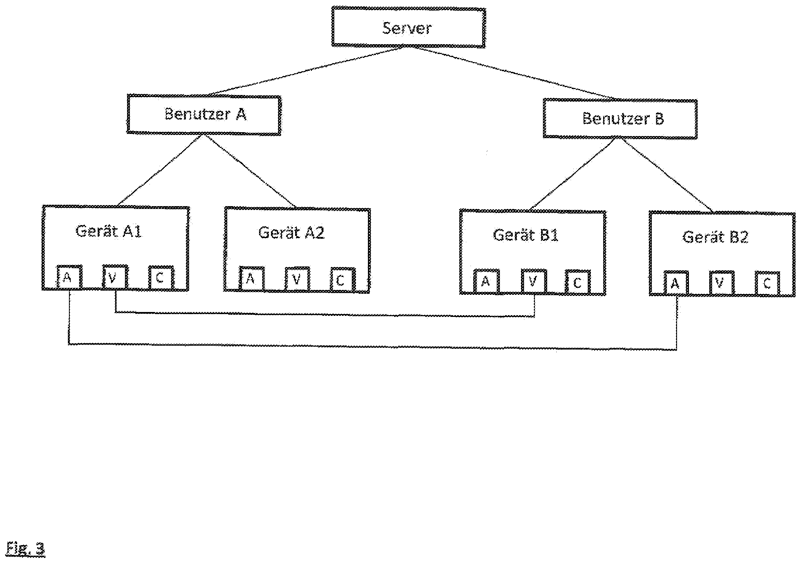

Fig. 3 zeigt in beispielhafter Weise einen Ruf, bei dem ein Teilnehmer B von einem Gerät B2 Audiodaten und von einem anderen Gerät B1 Videodaten empfängt und der Server die SDP-Daten dieser beiden Endgeräte B1 und B2 zu einer SDP-Beschreibung kombiniert, bevor sie zu Teilnehmer A gesendet werden. Dieser kann dann gemäß diesem Beispiel auf einem einzigen Gerät A1 sowohl die Audiodaten A als auch die Videodaten V empfangen, und zwar vom Gerät B2 bzw. vom Gerät B1 von Teilnehmer B. Wie aus diesem Beispiel ersichtlich, wird hier das Gerät A2 von Teilnehmer A gar nicht benutzt. Bei diesem angegebenen Beispiel stehen die Daten C für allgemeine Daten, wie sie beispielsweise für Steuerungssignale wie beispielsweise Instant Messaging verwendet werden. Die Daten C können somit beliebige Daten - ausgenommen der vorgenannten Audio- und Videodaten - sein. Es ist selbstverständlich klar, dass es beliebig viele weitere Beispiele einer Verbindung mit verteilten Medien gibt.

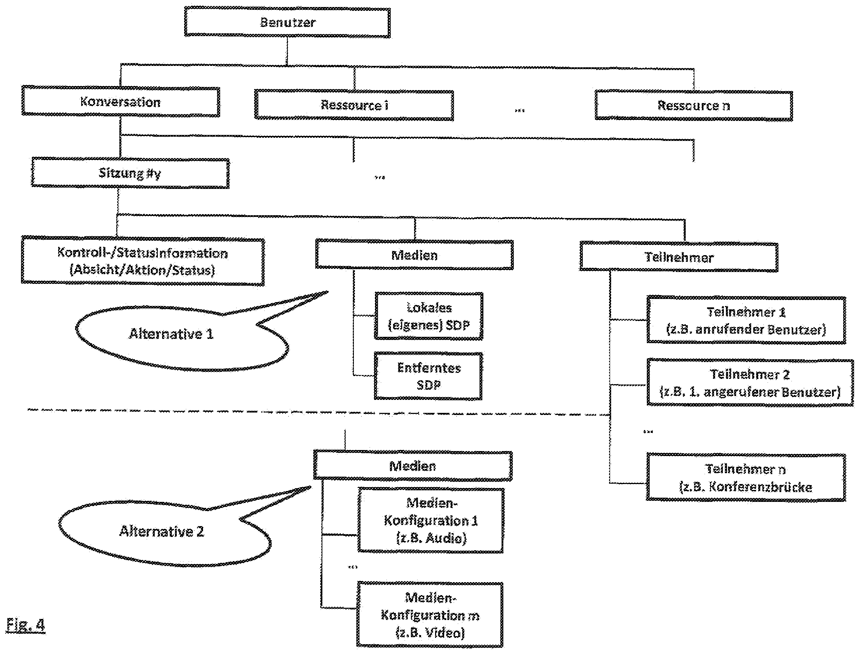

Fig. 4 zeigt in beispielhafter Weise ein Modell einer von einem RESTful-Server verwendeten Session-Ressource. Dieses Beispiel einer Realisierung baut auf dem im Web verwendeten Konzept von Ressourcen auf und setzt zur Kommunikation zwischen Webserver und Clients ein Verfahren ein, das anstatt eines der bekannten Signalisierungsprotokolle wie SIP (Session Initiation Protocol) den Ansatz von RESTful (Representational State Transfer)-Prozeduren mit asynchronem Event Reporting verbindet. REST beschreibt einen bestimmten Programmierstil für Webanwendungen. Eine Darstellung der grundlegenden Prinzipien ist beispielsweise in http://de.wikipedia.org/wiki/Representational_State_Transfer angegeben. REST basiert auf dem abstrakten Modell einer Ressource am Webserver, auf die durch einen URI (Uniform Resource Identifier) eindeutig zugegriffen werden kann. Hierzu gibt es einen Satz von Standardbefehlen CRUD (Create, Read, Modify/Update, Delete), mit denen die Ressource erzeugt, gelesen, geändert und auch wieder gelöscht werden kann. Diese Befehle lassen sich beispielsweise auch durch die HTTP-Methoden PUT, GET, POST, DELETE realisieren. Diese RESTful-CRUD-Operationen werden hier beispielsweise auf folgende HTTP-Methoden abgebildet:
Create → HTTP POST
Read → HTTP GET
Update → HTTP PUT
Delete → HTTP DELETE

Damit kann der Anrufer eine neue Ressource am Server anlegen, wenn er einen anderen Teilnehmer anruft und eine neue Kommunikations-Session beginnt. Dies kann mit Hilfe der REST-Prinzipien komplett abgedeckt werden.

Im Weiteren reichen die RESTful-CRUD-Operationen alleine nicht aus. Hier ist noch eine neue, in REST bisher nicht vorgesehene, NOTIFY-Operation erforderlich, damit der Angerufene auch davon erfährt, dass er zu der Kommunikations-Session eingeladen ist, bzw. dass er gerade angerufen wird. Mit Hilfe der NOTIFY-Operation wird dem Angerufenen somit mitgeteilt, dass eine neue Ressource (d.h. die neue Kommunikation-Session) angelegt wurde.

Anschließend kann auch der Angerufene die REST-Prinzipien nutzen.

Auch auf der Seite des Anrufers ist noch die NOTIFY-Operation erforderlich, wenn sich die Ressource ändert, weil z. B. der Angerufene seine Medienparameter bekannt macht. Weitere Details hierzu sind ersichtlich aus http://de.wikipedia.org/wiki/CRUD.

In Fig. 4 ist somit dargestellt, wie ein Anruf bzw. eine aktive Kommunikationsbeziehung als Session-Ressource modelliert werden kann. Diese enthält als oberste Ressource den User bzw. Teilnehmer und zahlreiche Sub-Ressourcen für einen oder mehrere Rufe bzw. Calls, benutzte Medien (Audio, Video), andere Teilnehmer (z. B. bei einer Konferenz) bzw. Participants,... Gemäß diesem Beispiel wird ein Ruf mit zwei bis n Teilnehmern als ein Satz von jeweils den beteiligten Nutzern zugeordneten, zentral am Webserver verwalteten Ressourcen modelliert. Der Webserver übernimmt auch die Koordination dieser Ressourcen zu einem einheitlichen Gesamtbild des Rufes.

Die vorstehend in Fig. 1 skizzierten Abläufe verwenden die beiden in Fig. 4 unter "media" positionierten Container für den Austausch von angepasster Anforderung (SDP-OFFER) 52 und (angepasster) Antwort (SDP-ANSWER) 60 bzw. 62 zwischen den Clients 20, 30 und dem Webserver 40 in der in Fig. 1 angegebenen Reihenfolge. Dies geschieht einerseits durch die im RESTful-Ansatz gebräuchlichen, an HTTP (Hypertext Transfer Protocol) orientierten Standardbefehle Create, Read, Modify, Delete, vom Client zum Server (synchrones Request/Response-Verfahren), andererseits durch asynchrone Event Reports vom Server zum Client (die genannte NOTIFY-Operation).

Wie vorstehend dargestellt, ist erfindungsgemäß eine modifizierte Funktionsaufteilung bei der SDP-Erstellung möglich. Darüber hinaus ist es möglich, eine Ressourcen-basierte Steuerung einzusetzen, anstatt eines der üblichen Signalisierungsprotokolle zu verwenden.

Zusammenfassend ist festzuhalten:
- Die Ressourcen befinden sich am sogenannten Back-End-Server,
- jeder Teilnehmer bzw. User stellt eine Wurzel des jeweiligen Ressourcenbaums dar,
- eine Session-Ressource #y ist eine Instanz der Konversationsressourcen eines Teilnehmers (d. h. die jeweilige Konversation),
- die Sub-Ressource media beschreibt die aktuelle Medienkonfiguration pro Medientyp (Alternative 2) oder pro Endpunkt (Alternative 1),
- die Participant-Sub-Ressourcen sind alle teilnehmenden User einer Session,
- eine Konferenzbrücke ist ebenfalls als separater Teilnehmer bzw. Participant modelliert, z. B. mit einem Medienserver, der alle Medienströme behandelt.

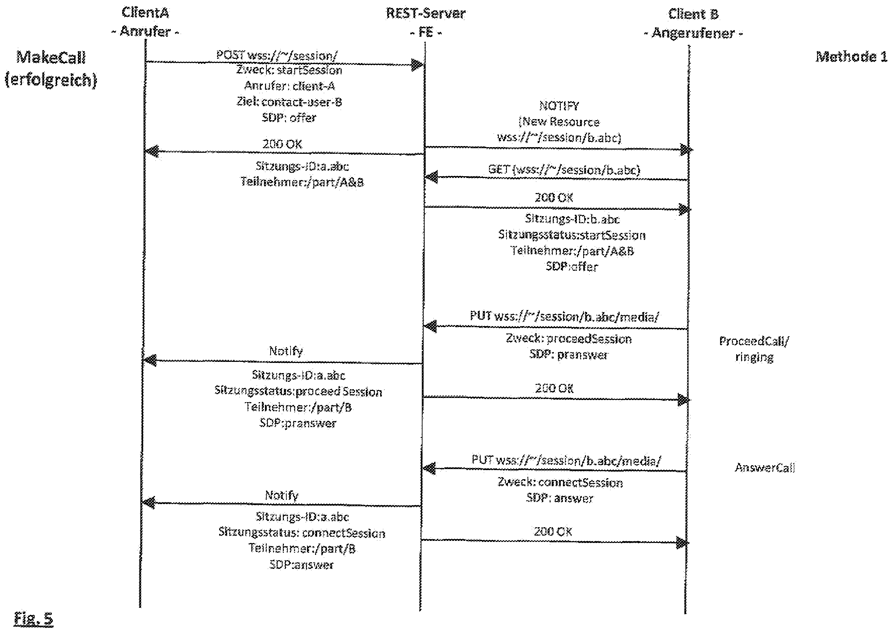

In Fig. 5 ist eine erste Methode eines Rufaufbaus von einem Anrufer (Calling Party) über einen REST-Server (Functional Entity bzw. FE) zu einem Angerufenen (Called Party) dargestellt. Ein GET-Request wird zu der Ressource geschickt, die per NOTIFY bekannt gemacht wurde. In der zugehörigen Meldung 200 OK befinden sich dann alle Parameterwerte für die zugehörige Instanz der Ressource und aller Sub-Ressourcen mit deren Parameterwerten.

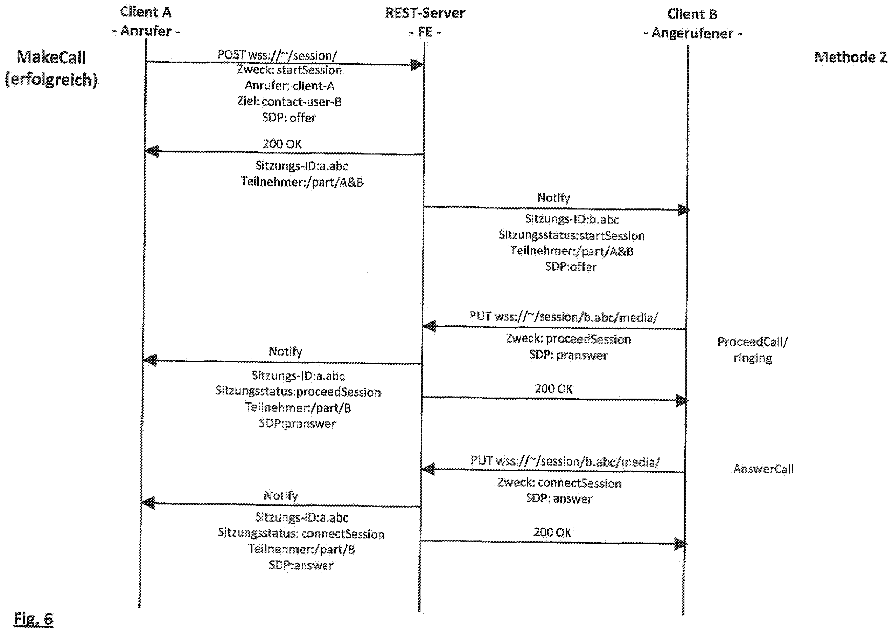

Gemäß der in Fig. 6 dargestellten Methode 2 könnte auch schon die NOTIFY-Nachricht die Parameterwerte enthalten. Auf diese Weise kann der bei der ersten Alternative verwendete GET-Request eingespart werden.

Es ist ersichtlich, dass das NOTIFY-Kommando einen oder mehrere Ressourcen-URIs (gegebenenfalls mit Zusatzparametern) enthalten kann. Im Fall eines Ressourcen-URI ohne Zusatzparameter muss der Client dann eine oder mehrere GET-Requests zum jeweiligen Ressourcen-URI schicken, um die gesamte Information zu erhalten.

Enthält der GET-Request einen Ressourcen-URI mit Zusatzparametern, dann erhält er nur geänderte Parameter für die jeweilige Ressource.

Ähnliches gilt für den PUT-Request. Enthält der PUT-Request nur einen Ressourcen-URI ohne Zusatzparameter, wird die Ressource komplett neu angelegt. Bei einem Ressourcen-URI mit Zusatzparametern werden nur die Sub-Ressourcen entsprechend den Parametern geändert.

Zur Erläuterung sei noch angefügt, dass sich der Ausdruck "SDP: pranswer" im Zusammenhang mit einer NOTIFY-Nachricht auf das Konzept einer "provisional answer" in JSEP bezieht, was einer Art Vorschau gleichkommt.

Es ist festzuhalten, dass vorstehend als Verfahrensschritte (als Bestandteile des erfindungsgemäßen Verfahrens) beschriebene Merkmale in entsprechender Weise auch als Vorrichtungsmerkmale bei der erfindungsgemäßen Telekommunikationsanordnung vor gesehen sein können, ohne dass dies gesonderter Erwähnung bedürfte. Diese Entsprechung von Merkmalen gilt auch in umgekehrter Richtung für als Vorrichtungsmerkmale beschriebene Elemente der Telekommunikationsanordnung.

Es ist außerdem festzuhalten, dass die unter Bezug auf die dargestellten Ausführungsformen beschriebenen Merkmale der Erfindung, wie beispielsweise Webserver, (Web)RTC-Clients, die Art und Ausgestaltung der verwendeten Parameter, Steuerbefehle, Protokolle und Hardware-Komponenten, die Anordnung der einzelnen Komponenten relativ zueinander oder die Abfolge der jeweiligen Verfahrensschritte, auch bei anderen Ausführungsformen oder Varianten hiervon vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.

### Bezugszeichenliste

- 10: = Telekommunikationsanordnung
- 20: = erster Browser/RTC-Client
- 22: = erster Funktionsblock
- 23: = erster WebRTC-Client
- 24: = zweiter Funktionsblock
- 25: = PeerConnection-API
- 30: = zweiter Browser/RTC-Client
- 32: = erster Funktionsblock
- 33: = zweiter WebRTC-Client
- 34: = zweiter Funktionsblock
- 35: = PeerConnection-API
- 40: = Webserver
- 50: = Anforderung/SDP-OFFER
- 52: = angepasste Anforderung/SDP-OFFER
- 60: = Antwort/ANSWER
- 62: = angepasste Antwort/ANSWER
- 90: = Datenträger
- 92: = Computerprogrammprodukt
- S1-S11: = Schritte
- A: = Audiodaten
- C: = allgemeine Daten
- V: = Videodaten

## Patentansprüche

1. Computerimplementiertes Verfahren zum Aufbau einer für die Übermittlung von Medienströmen geeigneten Kommunikationsverbindung von einem ersten RTC-Client (20) zu einem zweiten RTC-Client (30), umfassend folgende Schritte:
- der erste RTC-Client (20) erstellt eine Anforderung (50) zum Aufbau der Kommunikationsverbindung, wobei die Anforderung (50) Medien-spezifische Daten und/oder Parameter des ersten RTC-Clients (20) umfasst,
- es wird eine Anpassung der Anforderung (50) an die Medien-spezifischen Daten und/oder Parameter des zweiten RTC-Clients (30) ausgeführt,
- die angepasste Anforderung (52) wird an den zweiten RTC-Client (30) übertragen,
- der zweite RTC-Client (30) erstellt eine Antwort (60) auf die angepasste Anforderung,
- der zweite RTC-Client (30) wird unter Verwendung der angepassten Anforderung (52) und der Antwort (60) konfiguriert, und die Antwort (60) wird außerdem an den ersten RTC-Client (20) übertragen, und
- der erste RTC-Client (20) wird unter Verwendung der angepassten Anforderung (52) und der Antwort (60) konfiguriert, wobei
- sowohl der erste RTC-Client (20) als auch der zweite RTC-Client (30) ein Browser ist oder einen Browser beinhaltet,
- der erste RTC-Client (20) die Anforderung (50) an einen Webserver (40) übermittelt und der zweite RTC-Client (30) die Antwort (60) an den Webserver (40) übermittelt, und
- der Webserver (40) die Anpassung der Anforderung (50) vornimmt und die angepasste Anforderung (52) sowohl an den zweiten RTC-Client (30) als auch zurück an den ersten RTC-Client (20) übermittelt sowie die Antwort (60) sowohl an den ersten RTC-Client (20) als auch zurück an den zweiten RTC-Client (30) übermittelt.

2. Verfahren nach Anspruch 1,
**dadurch gekennzeichnet, dass** der Webserver (40) eine Anpassung der Antwort (60) an die Medien-spezifischen Daten und/oder Parameter des ersten RTC-Clients (20) sowie erforderlichenfalls der Kommunikationsverbindung ausführt, bevor der Webserver (40) die angepasste Antwort (62) an den ersten RTC-Client (20) und an den zweiten RTC-Client (30) übermittelt.

3. Verfahren nach Anspruch 1 oder 2,
**dadurch gekennzeichnet, dass** einem Benutzer mehrere Kommunikationsgeräte zugeordnet sind, die jeweils einen ersten RTC-Client (20) und/oder einen zweiten RTC-Client (30) aufweisen, und dass unterschiedliche Medientypen zu verschiedenen Kommunikationsgeräten übermittelt werden.

4. Verfahren nach Anspruch 3,
**dadurch gekennzeichnet, dass** die Medienströme verschiedenartige Medien umfassen.

5. Verfahren nach einem der vorhergehenden Ansprüche,
**dadurch gekennzeichnet, dass** als Verbindung zwischen dem ersten RTC-Client (20), dem zweiten RTC-Client (30) und dem Webserver (40) eine Web-Socket-Verbindung oder ein HTTP-PUT-Request verwendet wird.

6. Verfahren nach einem der vorhergehenden Ansprüche,
**dadurch gekennzeichnet, dass** für die Kommunikation zwischen dem ersten RTC-Client (20), dem zweiten RTC-Client (30) und dem Webserver (40) RESTful-Prozeduren in Kombination mit asynchronem Event Reporting verwendet werden.

7. Verfahren nach einem der vorhergehenden Ansprüche,
**dadurch gekennzeichnet, dass** das Session Description Protocol zur Erstellung und Übermittlung der Anforderung, der angepassten Anforderung, der Antwort und der angepassten Antwort verwendet wird.

8. Computerprogrammprodukt (92) zur Durchführung des Verfahrens gemäß einem der vorhergehenden Ansprüche wenn das Computerprogrammprodukt auf einer Telekommunikationsanordnung aufweisend einen Webserver, einen ersten RTC-Client und einen zweiten RTC-Client ausgeführt wird.

9. Maschinenlesbarer Datenträger (90) mit darauf gespeichertem Computerprogrammprodukt (92) gemäß Anspruch 8.

10. Telekommunikationsanordnung (10), aufweisend
- einen Webserver (40),
- einen mit dem Webserver (40) verbindbaren oder verbundenen ersten RTC-Client (20),
- einen mit dem Webserver (40) verbindbaren oder verbundenen zweiten RTC-Client (30),
**dadurch gekennzeichnet, dass** der Webserver (40), der erste RTC-Client (20) und der zweite RTC-Client (30) Einrichtungen zum Ausführen des Verfahrens gemäß einem der Ansprüche 1 bis 8 aufweisen, wobei die Einrichtungen insbesondere als Software-Komponenten ausgestaltet sind.

## Claims

1. Computer-implemented method for establishing a communication connection which is suitable for transmitting media streams between a first RTC client (20) and a second RTC client (30), comprising the following steps:
- the first RTC client (20) creates a request (50) to establish the communication connection, whereby the request (50) comprises media-specific data and/or parameters of the first RTC client (20),
- the request (50) is adapted to the media-specific data and/or parameters of the second RTC client (30),
- the adapted request (52) is transmitted to the second RTC client (30),
- the second RTC client (30) creates a response (60) to the adapted request,
- the second RTC client (30) is configured using the adapted request (52) and the response (60), and the response (60) is also transmitted to the first RTC client (20), and
- the first RTC client (20) is configured using the adapted request (52) and the response (60), whereby
- both the first RTC client (20) and the second RTC client (30) are a browser or contain a browser,
- the first RTC client (20) transmits the request (50) to a Web server (40) and the second RTC client (30) transmits the response (60) to the Web server (40), and
- the Web server (40) carries out the adaptation of the request (50) and transmits the adapted request (52) both to the second RTC client (30) and back to the first RTC client (20), as well as transmits the response (60) both to the first RTC client (20) and back to the second RTC client (30).

2. Method according to claim 1,
**characterized in that** the Web server (40) carries out an adaptation of the response (60) to the media-specific data and/or parameters of the first RTC client (20) and, if necessary, the communication connection before the Web server (40) transmits the adapted response (62) to the first RTC client (20) and to the second RTC client (30).

3. Method according to claim 1 or 2,
**characterized in that** to a user are assigned several communication devices which have a first RTC client (20) and/or a second RTC client (30) in each case, and that various media types are transmitted to different communication devices.

4. Method according to claim 3,
**characterized in that** the media streams comprise different media.

5. Method according to one of the preceding claims,
**characterized in that** a Web socket connection or an HTTP PUT request is used as the connection between the first RTC client (20), the second RTC client (30) and the Web server (40).

6. Method according to one of the preceding claims,
**characterized in that** RESTful procedures in combination with asynchronous event reporting are used for the communication between the first RTC client (20), the second RTC client (30) and the Web server (40).

7. Method according to one of the preceding claims,
**characterized in that** the Session Description Protocol is used to create and transmit the request, the adapted request, the response and the adapted response.

8. Computer program product (92) for carrying out the method according to one of the preceding claims if the computer program product is executed on a telecommunications assembly having a Web server, a first RTC client and a second RTC client.

9. Machine-readable data storage medium (90) with the computer program product (92) stored thereon, according to claim 8.

10. Telecommunications assembly (10) having
- a Web server (40),
- a first RTC client (20) connectable or connected to the Web server (40),
- a second RTC client (30) connectable or connected to the Web server (40),
**characterized in that** the Web server (40), the first RTC client (20) and the second RTC client (30) have facilities for executing the method according to one of claims 1 to 8, whereby the facilities are designed especially as software components.

## Revendications

1. Procédé, mis en oeuvre par ordinateur, pour établir une connexion de communication, appropriée à la transmission de flux de médias, d'un premier client RTC (20) à un second client RTC (30), comportant les étapes suivantes :
- le premier client RTC (20) génère une demande (50) pour établir la connexion de communication, dans lequel la demande (50) comporte des données et/ou des paramètres, spécifiques aux médias, du premier client RTC (20),
- une adaptation de la demande (50) aux données et/ou aux paramètres, spécifiques aux médias, du second client RTC (30) est exécutée,
- la demande adaptée (52) est transférée au second client RTC (30),
- le second client RTC (30) génère une réponse (60) à la demande adaptée,
- le second client RTC (30) est configuré à l'aide de la demande adaptée (52) et de la réponse (60), et la réponse (60) est en outre transférée au premier client RTC (20), et
- le premier client RTC (20) est configuré à l'aide de la demande adaptée (52) et de la réponse (60), dans lequel
- aussi bien le premier client RTC (20) que le second client RTC (30) est un navigateur ou contient un navigateur,
- le premier client RTC (20) transmet la demande (50) à un serveur Web (40) et le second client RTC (30) transmet la réponse (60) au serveur Web (40), et
- le serveur Web (40) réalise l'adaptation de la demande (50) et la demande adaptée (52) est transmise aussi bien au second client RTC (30) que, en retour, au premier client RTC (20) ainsi qu'il transmet la réponse (60) aussi bien au premier client RTC (20) que, en retour, au second client RTC (30).

2. Procédé selon la revendication 1,
**caractérisé en ce que** le serveur Web (40) exécute une adaptation de la réponse (60) aux données et/ou aux paramètres, spécifiques aux médias, du premier client RTC (20) ainsi que, le cas échéant, de la connexion de communication avant que le serveur Web (40) transmette la réponse adaptée (62) au premier client RTC (20) et au second client RTC (30).

3. Procédé selon la revendication 1 ou 2,
**caractérisé en ce qu'**à un utilisateur sont attribués plusieurs appareils de communication qui comprennent chacun un premier client RTC (20) et/ou un second client RTC (30), et **en ce que** des types de médias différents sont transmis à des appareils de communication différents.

4. Procédé selon la revendication 3,
**caractérisé en ce que** les flux de médias comportent des médias de différents types.

5. Procédé selon l'une quelconque des revendications précédentes,
**caractérisé en ce qu'**une connexion Web-Socket ou une demande HTTP-PUT est employée en tant que connexion entre le premier client RTC (20), le second client RTC (30) et le serveur Web (40) .

6. Procédé selon l'une quelconque des revendications précédentes,
**caractérisé en ce que** pour la communication entre le premier client RTC (20), le second client RTC (30) et le serveur Web (40) sont employées des procédures RESTful en combinaison avec un rapport d'événement asynchrone.

7. Procédé selon l'une quelconque des revendications précédentes,
**caractérisé en ce que** le protocole de description de session est employé pour la génération et le transfert de la demande, de la demande adaptée, de la réponse et de la réponse adaptée.

8. Produit-programme d'ordinateur (92) pour la réalisation du procédé selon l'une quelconque des revendications précédentes lorsque le produit-programme d'ordinateur est exécuté sur un système de télécommunication comprenant un serveur Web, un premier client RTC et un second client RTC.

9. Support d'informations lisible par machine (90) comportant un produit-programme d'ordinateur (92) selon la revendication 8.

10. Système de télécommunication (10), comprenant
- un serveur Web (40),
- un premier client RTC (20) connecté ou pouvant être connecté au serveur Web (40),
- un second client RTC (30) connecté ou pouvant être connecté au serveur Web (40),
**caractérisé en ce que** le serveur Web (40), le premier client RTC (20) et le second client RTC (30) comprennent des dispositifs pour exécuter le procédé selon l'une quelconque des revendications 1 à 8, dans lequel les dispositifs sont agencés en particulier en tant que composants logiciels.
